# EUROPEAN PATENT APPLICATION

(11) **EP 2 237 362 A1**
(43) Date of publication of application: **06.10.2010**
(21) Application number: 08858598.9
(22) Date of filing: 10.12.2008
(51) Int. Cl.: H01M 14/00, H01L 31/04

(54) **DYE-SENSITIZED SOLAR CELL AND MANUFACTURING METHOD OF SAME**

(30) Priority: 11.12.2007 JP 2007319802
(71) Applicant: Nippon Steel Chemical Co., Ltd., Chiyoda-ku Tokyo 101-0021 (JP); National University Corporation Kyushu Institute Of Technology, Tobata-ku Kitakyushu-shi Fukuoka 804-8550 (JP)
(72) Inventor: HAYASE, Shuzi, Kitakyushu-shi Fukuoka 804-8550 (JP); YAMAGUCHI, Yoshihiro, Kitakyusyu-shi Fukuoka 804-8503 (JP)
(74) Representative: Giles, Ashley Simon
(86) International application number: PCT/JP2008/003682
(87) International publication number: WO 2009/075101

(57) **Abstract**

There are provided a dye-sensitized solar cell which can simply be manufactured, has a high power extraction efficiency, and is suitable for its upsizing, and a method for manufacturing the dye-sensitized solar cell. The dye-sensitized solar cell is provided with a transparent substrate 12, a porous semiconductor layer 14 having a dye adsorbed thereon, a conductive metal film 16, and a substrate having a conductive film, and has an electrolyte between the conductive metal film 16 and the substrate having a conductive film. A large number of deep poriform through-holes are irregularly formed in the conductive metal film 16. The conductive metal film 16 is electrically connected to an external electrode. The through-holes are obtained by forming the conductive metal film 16 on a microparticle layer formed by disposing a microparticle 28 having a shape anisotropy on the porous semiconductor layer 14, and then eliminating the microparticle layer by heating or solvent cleaning.

## Description

### Technical Field

The present invention relates to a dye-sensitized solar cell, and a method for manufacturing the dye-sensitized solar cell.

### Background Art

The dye-sensitized solar cell is called a wet solar cell, Graetzel cell, or the like, and is characterized by having an electrochemical cell structure represented by an iodine solution without using a silicon semiconductor. The dye-sensitized solar cell specifically has a simple structure in which an iodine solution or the like as an electrolyte solution is disposed between a porous semiconductor layer of a titania layer or the like formed by baking titanium dioxide powder or the like on a transparent conductive glass plate (a transparent substrate having a transparent conductive film laminated thereon) and making a dye adsorbed on the baked powder, and a counter electrode composed of a conductive glass plate (conductive substrate).

The dye-sensitized solar cell, since it is inexpensive in terms of its materials and does not need a large-scaled facility for its fabrication, attracts attention as a low-cost solar cell.

The dye-sensitized solar cell is required to be further improved in the conversion efficiency of solar light, and studies have been made from various viewpoints.

As one of the studies, in order to improve the power extraction efficiency by an improvement in the conductivity of an electrode, an attempt has been made in which a transparent conductive film usually formed on a transparent substrate installed on the light incident side is eliminated. This has a great significance especially when a solar cell is made large-sized.

For example, a dye-sensitized solar cell is disclosed in which a transparent conductive film is eliminated; a TiO₂ porous semiconductor layer having a dye adsorbed thereon is directly on a transparent substrate; and Ti is sputtered on the porous semiconductor layer surface to form a perforated Ti thin film as a current collector electrode (see Non-patent Document 1). The conversion efficiency of solar light of this cell is reportedly 3.6%.

Further for example, a photoelectric converter is disclosed which has a structure having a laminated portion including a semiconductor microparticle layer, a metal net, a charge transfer layer and a counter electrode in this order on a glass substrate, wherein the metal net and the charge transfer layer are directly contacted with each other (see Patent Document 1).
Patent Document 1: Japanese Patent Laid-Open No. 2007-73505
Non-patent Document 1 : J. M. Kroon, et al., Nanocrystalline Dye-Sensitized Solar Cells Having Maximum Performance, Prog. Photovolt., WileyInterScience, 2006

### Disclosure of the Invention

### Problems to be Solved by the Invention

However, Non-patent Document 1 makes no mention of the thickness, aperture ratio and the like of a Ti thin film, but in the case where the thickness of the Ti thin film formed by sputtering is extremely thin, for example, about 20 nm, although holes are formed in the Ti thin film formed on irregularities of TiO₂ particles in the porous semiconductor layer surface, the sheet resistivity of the Ti thin film becomes large, which may not lead to a large improvement in the power extraction efficiency. By contrast, if the thickness of the Ti thin film is intended to be made thick, for example, about several hundreds of nanometers, in order to reduce the sheet resistivity of the Ti thin film, holes are not formed in the Ti thin film and the permeation of an electrolyte solution into the porous semiconductor layer is inhibited, which may not function as a solar cell.

A dye-sensitized solar cell of Patent Document 1 needs a complicated manufacturing method, which may raise the manufacturing cost.

The present invention has been achieved in consideration of the above-mentioned problems, and has an object to provide a dye-sensitized solar cell which can simply be manufactured, has a high power extraction efficiency, and is suitable for its upsizing, and to provide a method for manufacturing the dye-sensitized solar cell.

### Means for Solving the Problems

The dye-sensitized solar cell according to the present invention comprises a transparent substrate, a porous semiconductor layer disposed on the transparent substrate and having a dye adsorbed thereon, a conductive metal film disposed in the interior of the porous semiconductor layer or on a surface on the opposite side thereof to the transparent substrate, having a large number of deep poriform through-holes irregularly formed therein, and electrically connected to an external electrode, and a conductive substrate installed opposite to the transparent substrate, and is characterized by having an electrolyte between the conductive metal film and the conductive substrate.

The dye-sensitized solar cell according to the present invention is **characterized in that** the conductive metal film has preferably a thickness of 100 nm or more.

The dye-sensitized solar cell according to the present invention is **characterized in that** the material of the conductive metal film is preferably a corrosion resistant metal.

The dye-sensitized solar cell according to the present invention is **characterized in that** the corrosion resistant metal is preferably one or two or more selected from tungsten, titanium and nickel, or a compound thereof.

The method for manufacturing a dye-sensitized solar cell according to the present invention, which is a method for manufacturing the above-mentioned dye-sensitized solar cell, comprises:
a microparticle layer formation step of disposing a microparticle having a shape anisotropy and removable by heating or solvent cleaning, on a porous semiconductor layer to form a microparticle layer;
a conductive metal film formation step of forming a conductive metal film on the microparticle layer; and
a microparticle layer elimination step of eliminating the microparticle layer by heating or solvent cleaning.

The method for manufacturing a dye-sensitized solar cell according to the present invention, which is a method for manufacturing the above-mentioned dye-sensitized solar cell, comprises:
a mixed layer formation step of forming a mixed layer of a porous semiconductor material and a microparticle having a shape anisotropy and removable by heating or solvent cleaning, on a porous semiconductor layer;
a conductive metal film formation step of forming a conductive metal film on the mixed layer; and
a microparticle layer elimination step of eliminating the microparticle by heating or solvent cleaning.

The method for manufacturing a dye-sensitized solar cell according to the present invention, which is a method for manufacturing the above-mentioned dye-sensitized solar cell, comprises:
a mixed layer formation step of forming a mixed layer of a conductive metal and a microparticle having a shape anisotropy and removable by heating or solvent cleaning, on a porous semiconductor layer; and
a microparticle layer elimination step of eliminating the microparticle by heating or solvent cleaning.

The method for manufacturing a dye-sensitized solar cell according to the present invention preferably further comprises a porous semiconductor layer lamination step of forming another porous semiconductor layer different from the above-mentioned porous semiconductor layer, on the surface of the conductive metal film.

The method for manufacturing a dye-sensitized solar cell according to the present invention is **characterized in that** the microparticle having a shape anisotropy is preferably a microparticle having a large number of legs with vertices of a polyhedron as tips thereof or an acicular microparticle.

### Advantages of the Invention

In the dye-sensitized solar cell according to the present invention, since a transparent conductive film usually installed on a transparent substrate is eliminated and a conductive metal film is instead installed which is disposed in the interior of a porous semiconductor layer or on a surface thereof on the opposite side to the transparent substrate, has a large number of deep poriform through-holes irregularly formed therein, and is electrically connected to an external electrode, the dye-sensitized solar cell can simply be manufactured and the power extraction efficiency is high; and particularly by making the conductive metal film thick, a dye-sensitized solar cell suitable for its upsizing can be made.

Since the method for manufacturing a dye-sensitized solar cell according to the present invention, which is a method for manufacturing the above-mentioned dye-sensitized solar cell, uses a microparticle having a shape anisotropy and removable by heating or solvent cleaning, for formation of holes in the conductive metal film, the above-mentioned dye-sensitized solar cell can suitably be obtained.

### Brief Description of the Drawings

Figure 1 is a diagram schematically illustrating a sectional structure of the dye-sensitized solar cell according to the embodiment;
Figure 2(A) is a schematic diagram of a cell member structure to illustrate a manufacturing step in the manufacturing method of a dye-sensitized solar cell according to the embodiment, and is a diagram illustrating a porous semiconductor layer formation step;
Figure 2(B) is a schematic diagram of a cell member structure to illustrate a manufacturing step in the manufacturing method of a dye-sensitized solar cell according to the embodiment, and is a diagram illustrating a microparticle layer formation step;
Figure 2(C) is a schematic diagram of a cell member structure to illustrate a manufacturing step in the manufacturing method of a dye-sensitized solar cell according to the embodiment, and is a diagram illustrating a conductive metal film formation step;
Figure 2(D) is a schematic diagram of a cell member structure to illustrate a manufacturing step in the manufacturing method of a dye-sensitized solar cell according to the embodiment, and is a diagram illustrating a microparticle layer elimination step;
   (A) in Figure 3 shows a dye adsorbing state of titania in the case of using a porous Ti electrode in Example 1; and (B) therein shows a dye adsorbing state of a glass substrate in the case where a dense Ti layer in place of the porous Ti electrode is formed on the glass substrate by a conventional method;
Figure 4 is a diagram illustrating a relationship between the sheet resistance and the Ti film thickness of a dye-sensitized solar cell; and
Figure 5 is a diagram illustrating a relationship between the voltage and the current density of a dye-sensitized solar cell.

### Description of Symbols

- 10: DYE-SENSITIZED SOLAR CELL
- 12: TRANSPARENT SUBSTRATE
- 14: POROUS SEMICONDUCTOR LAYER
- 16: CONDUCTIVE METAL FILM
- 18: CONDUCTIVE FILM
- 20: SUBSTRATE
- 22: ELECTROLYTE
- 24: THROUGH-HOLE
- 26: EXTERNAL ELECTRODE
- 28: MICROPARTICLE

### Best Mode for Carrying Out the Invention

Preferable embodiments of the dye-sensitized solar cell and the manufacturing method thereof according to the present invention will be described hereinafter by way of drawings.

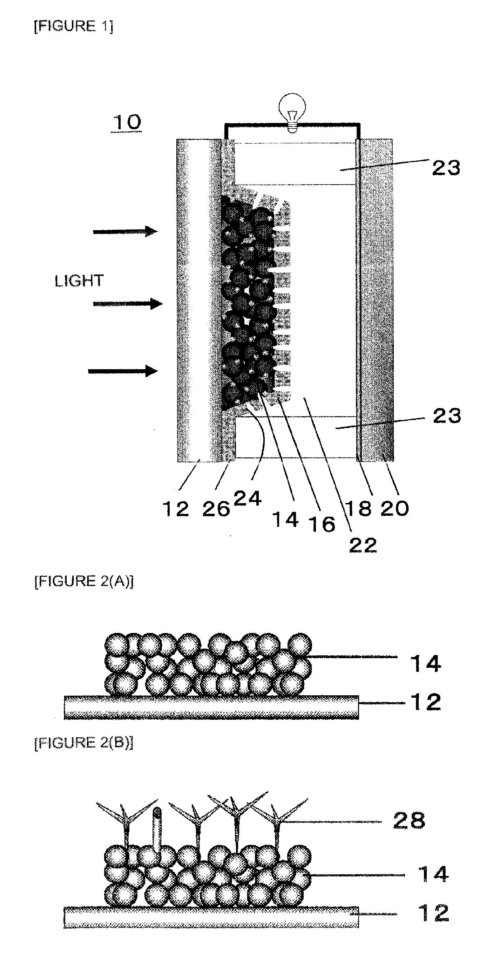

As schematically illustrated, for example, in Figure 1, the dye-sensitized solar cell 10 according to the embodiment comprises a transparent substrate 12, a porous semiconductor layer 14 having a dye adsorbed thereon and disposed on the transparent substrate 12, a conductive metal film 16 disposed on the surface of the porous semiconductor layer 14 on the opposite side to the transparent substrate 12, and a substrate 20 (conductive substrate) disposed opposite to the transparent substrate 12 and having a conductive film 18. The dye-sensitized solar cell 10 further comprises an electrolyte 22 between the conductive metal film 16 and the substrate 20 having the conductive film 18. In Figure 1, reference numeral 23 denotes a spacer installed in order to seal the electrolyte 22 in the cell.

In the conductive metal film 16, a large number of deep poriform through-holes 24 are irregularly formed. Here, the deep poriform through-hole 24 means a deep hole to such a degree that the hole having a relatively small diameter even in the case of a thick conductive metal film 16 securely penetrates through the conductive metal film 16, and refers to a long cylindrical hole having a depth size, for example, several times or several tens of times the size of a hole diameter.

The conductive metal film 16 is electrically connected to an external electrode (current collector electrode) 26 formed of, for example, the same material as the conductive metal film 16 and installed on the periphery of the transparent substrate 12. The external electrode 26 may be installed at a suitable position isolated from the transparent substrate 12. The conductive metal film 16 may be disposed in the interior of the porous semiconductor layer 14. Further, the conductive metal film 20 may be formed in plural numbers alternately with the porous semiconductor layer.

The conductive metal film 16 is preferably a conductive metal film at least having been not subjected to a thermal history of a temperature needed to bake the material of the porous semiconductor layer 14, and refers to a conductive metal film having been subjected to a thermal history of a temperature much lower than 500°C, more preferably a temperature of about 200°C or lower, or having been substantially not subjected to a heating step. The porous semiconductor layer 14 preferably has holes communicating with holes penetrating through the conductive metal film 16.

The transparent substrate 12 and the substrate 20 may be, for example, a glass plate or a plastic plate.

In the case of using a plastic plate, the plastic plate includes, for example, PET, PEN, polyimide, cured acryl resins, cured epoxy resins, cured silicone resins, various types of engineering plastics, and cyclic polymers obtained by metathesis polymerization.

The conductive film 18 may be, for example, ITO (tin-doped indium film), FTO (fluorine-doped tin oxide film), or a SnO₂ film, but is more preferably a platinum film.

A dye made adsorbed on the porous semiconductor layer 14 is one having an adsorption at wavelengths of 400 nm to 1,000 nm, and includes, for example, metal complexes such as ruthenium dyes and phthalocyanine dyes, and organic dyes such as cyanine dyes.

The electrolyte (electrolyte solution) 22 contains iodine, lithium ions, an ionic liquid, t-butylpyridine, or the like. For example, in the case of iodine, a redox material composed of a combination of an iodide ion and iodine can be used. The redox material contains a suitable solvent capable of dissolving the redox material.

The thickness of the porous semiconductor layer 14 is not especially limited, but is preferably 14 µm or more.

As one of methods of improving the conversion efficiency of solar light, there is conceivably a method of improving the adsorption efficiency of solar light by making a porous, semiconductor layer thick. However, if the electron diffusion length exceeds the thickness size of a porous semiconductor layer, there arises a problem that even if the porous semiconductor layer is made thicker than the length, no effect is exhibited and conversely the open circuit voltage decreases, decreasing the conversion efficiency.

By contrast, according to the dye-sensitized solar cell 10 according to the embodiment, since electrons easily move in the porous semiconductor layer 14 through the conductive metal film 16 functioning as a current collector layer, and the charge transfer resistance from the conductive metal film 16 to the electrolyte 22 is large and the electron reverse movement is hardly caused, a high conversion efficiency can be obtained even if the porous semiconductor layer 14 is made thick, for example, 14 µm or more. The upper limit of the thickness of the porous semiconductor layer 16 is suitably set depending on a value of the conversion efficiency obtained and the like, but is, for example, about 40 µm. The present invention can naturally be applied even to the case where the porous semiconductor layer 14 has a usual thickness.

As a semiconductor material for the porous semiconductor layer 14, usable are, for example, oxides of metals such as titanium, tin, zirconium, zinc, indium, tungsten, iron, nickel and silver, but above all, titanium oxide (titania) is more preferable.

A microparticle of titanium oxide includes a small one having a particle diameter of 10 nm or less and a large one having a particle diameter of about 20 to 30 nm. In the case where a film is fabricated using the former microparticle, a relatively dense film is made; and by contrast, in the case where a film is fabricated using the latter one, a porous film is made. Since there are irregularities on the surface of a transparent conductive film such as a tin oxide film, in order to cover the irregularities with high coverage, a relatively dense porous semiconductor layer 14 is desirably used. Hence, the porous semiconductor layer 14 is made of, for example, a two-layer structure; the first layer on the transparent conductive film side is formed of a microparticle of titanium oxide having a small particle diameter; and the second layer formed on the surface of the first layer is formed of a microparticle of titanium oxide having a larger particle diameter than the first layer, which is a preferable embodiment.

As a conductive metal film 16 usable, a suitable metal is selected as long as it has a reasonable conductivity. Here, the metal includes not only a single metal but a metal compound such as a metal oxide, and an alloy. The conductive metal film 16 may be coated on the surface of the metal with a dense oxide semiconductor, for example, titania.

However, a corrosion resistant metal is more preferably used from the viewpoint of securely preventing the corrosion of the conductive metal film 20 by the electrolyte 18 containing a redox material such as iodine.

As a corrosion resistant metal, tungsten (W), titanium (Ti), nickel (Ni) or a mixture thereof, or a metal compound thereof can be suitably used, but besides these, for example, a metal whose surface has been passivated can be used.

The conductive metal film 16 can be formed on the surface of the porous semiconductor layer 16 by a simple method such as coating, but is preferably formed by sputtering. At this time, for example, by previously cutting the end portion and the like of the porous semiconductor layer 14 by a suitable method, a connection part with the external electrode 26 is formed.

The thickness of the conductive metal film 16 is desirably as thick as possible from the viewpoint of making the sheet resistance of the film low, and is preferably 100 nm or more, and more preferably 200 nm or more. The upper limit of the thickness of the conductive metal film 16 is not especially limited, but is, for example, about 5 µm.

Further, the conductive metal film 16 may be formed interposing a porous semiconductor layer therebetween, that is, formed in plural numbers alternately with the porous semiconductor layer.

A method for forming a large number of deep poriform through-holes 24 formed in the conductive metal film 16 will be described later. The through-holes 24 are irregularly arranged, and are countlessly formed depending on the manufacturing condition, but are sufficiently formed in appropriate numbers as long as the electrolyte 22 sufficiently permeates and penetrates through the through-holes 24. The deep poriform through-holes 24 have a higher diffusivity of the electrolyte 22 to the porous semiconductor layer 14 than, for example, random small holes as in Non-patent Document 1.

In the dye-sensitized solar cell according to the embodiment, since a transparent conductive film usually installed on a transparent substrate is eliminated and a conductive metal film is instead installed on a surface and the like of a porous semiconductor layer, and has a large number of deep poriform through-holes irregularly formed therein, an electrolyte 22 can sufficiently permeate and penetrate the porous semiconductor layer through the through-holes, whereby the power extraction efficiency of the dye-sensitized solar cell is high and the dye-sensitized solar cell can simply be manufactured. Further, by making the conductive metal film thick, the sheet resistance of the conductive metal film can be made low and a dye-sensitized solar cell suitable for its upsizing can be made.

Here, the preferable method for manufacturing a dye-sensitized solar cell according to the embodiment will be described.

The method for manufacturing a dye-sensitized solar cell according to the embodiment comprises: a microparticle layer formation step of disposing a microparticle having a shape anisotropy and removable by heating or solvent cleaning, on a porous semiconductor layer to form a microparticle layer; a conductive metal film formation step of forming a conductive metal film on the microparticle layer; and a microparticle layer elimination step of eliminating the microparticle layer by heating or solvent cleaning.

Hereinafter, a manufacturing example will be described specifically with reference to Figure 2(A) to Figure 2(D) schematically illustrating manufacturing steps.

First, a material of a porous semiconductor layer 14 is applied on a transparent substrate 12 to form a porous semiconductor layer 14 (see Figure 2(A). Here, the porous semiconductor layer 14 refers to one obtained by applying the material of a porous semiconductor layer 14, and thereafter baking the applied material.

Then, a microparticle 28 having a shape anisotropy and removable by heating or solvent cleaning is disposed on the porous semiconductor layer 14 to form a microparticle layer (microparticle layer formation step, see Figure 2(B)).

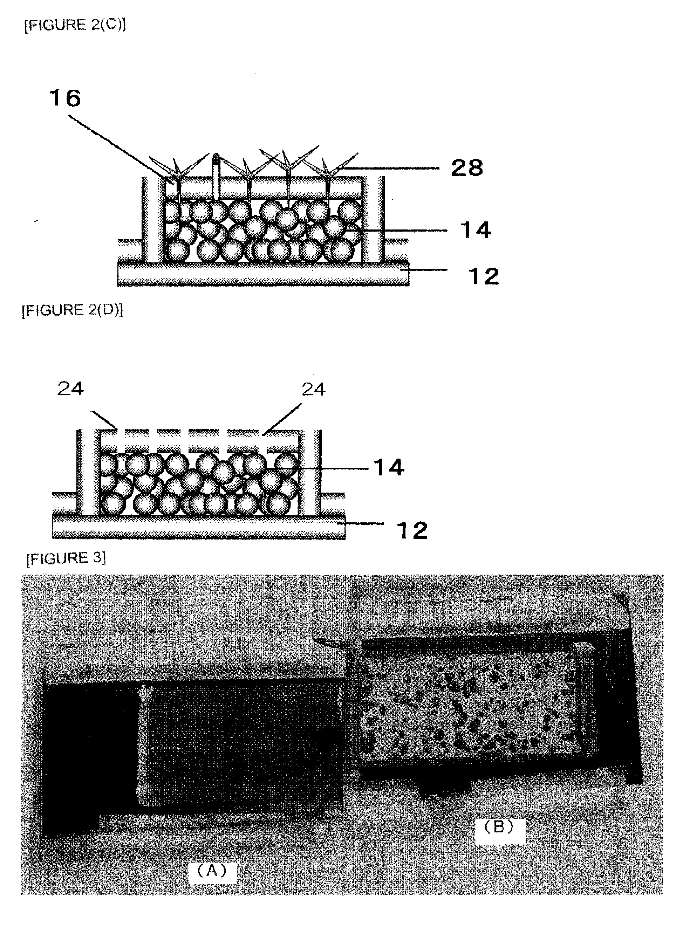

Then, a conductive metal film 16 is formed on the microparticle layer (conductive metal film formation step, see Figure 2(C)).

Then, the microparticle layer is eliminated by heating or solvent cleaning. Thereby, a large number of deep poriform through-holes 24 are irregularly formed in the conductive metal film 16 (microparticle layer elimination step, see Figure 2(D)).

Then, a dye is attached to the porous semiconductor layer.

Further, a substrate having a conductive film is disposed opposite to the transparent substrate, and these are sealed with a spacer and an electrolyte solution is injected to complete a dye-sensitized solar cell.

As before mentioned in the description of the dye-sensitized solar cell according to the embodiment, the conductive metal film is electrically connected to an external electrode having a suitable structure in a suitable step.

The material of a microparticle to be used is, in the case where the microparticle layer is removed by heating, a material which thermally decomposes and disappears at a temperature of not imposing thermal damage to the layers previously formed such as the porous semiconductor layer, and the material its baked at a temperature near the thermal decomposition temperature. The temperature of not imposing thermal damage to layers previously formed such as the porous semiconductor layer is a temperature sufficiently lower than, for example, 500°C, and more preferably about 200°C or lower. Thereby, a thermal influence on the conductive metal film 16, which would be caused if the conductive metal film 16 would be heated at a temperature of, for example, 500°C or higher, is alleviated. In the case where the microparticle layer is removed by solvent cleaning, a combination of a solvent and a microparticle material is used, wherein the solvent does not impose chemical damage to the layers previously formed such as the porous semiconductor layer, and the microparticle material can easily be removed by cleaning using the solvent.

Such a microparticle material is not especially limited, but suitably usable is, for example, a resin such as polystyrene or poly(methyl methacrylate), or a metal oxide such as zinc oxide. A solvent to be used for solvent cleaning is not especially limited, and may be suitably selected in conformance with the microparticle material, and usable are, for example, an organic solvent such as toluene capable of dissolving a resin, and an acid such as dilute hydrochloric acid capable of dissolving a metal.

The microparticle formed of the above-mentioned material to be used has a shape anisotropy. Such a microparticle to be used is preferably a microparticle having a large number of legs with vertices of a polyhedron as tips thereof or an acicular microparticle.

In the case of using a microparticle having a large number of legs with vertices of a polyhedron as tips thereof, for example, even when only one layer of the microparticle is sprayed or otherwise on a porous semiconductor layer, the microparticle preferably has a size of such a degree that the microparticle securely penetrate through a conductive metal film formed on the microparticle and having a reasonably thick thickness to form holes, and the size of such a microparticle is, for example, 1 to 30 µm, depending on the thickness of the conductive metal film.

On the other hand, in the case of using an acicular microparticle, spraying the acicular microparticle, for example, by the electronics spray method can cause the acicular microparticle to rise on a porous semiconductor layer or to make a standing state thereof. Hence, the size of such an acicular microparticle is not especially limited, but is preferably a reasonable length in conformance with the thickness of the conductive metal film, and the acicular microparticles are preferably sprayed on the porous semiconductor layer so as to lie one upon another.

Disposing the microparticles having these shape anisotropies on the porous semiconductor layer 14 forms deep holes also in the porous semiconductor layer 14 after the microparticles are eliminated. Then, the permeation and diffusion of an electrolyte solution in the interior of the porous semiconductor layer 14 is better performed through the deep holes communicating with the above-mentioned holes of the conductive metal film.

According to the method for manufacturing a dye-sensitized solar cell according to the embodiment, a relatively stable conductive metal film can easily be formed on a microparticle layer by a suitable method such as the vapor deposition method or the coating method, and a large number of deep poriform through-holes or long cylindrical through-holes having a large depth irregularly arranged in the conductive metal film can easily be formed in a process to remove the microparticle layer by heating or the like.

The method for manufacturing a dye-sensitized solar cell according to the embodiment may comprise a mixed layer formation step of forming a mixed layer of a porous semiconductor material and a microparticle having a shape anisotropy and removable by heating or solvent cleaning, on the porous semiconductor layer, and a microparticle layer elimination step of eliminating the microparticle by heating or solvent cleaning.

Thereby, a conductive metal film in which a large number of through-holes are formed and irregularly arranged is obtained, and the porous semiconductor material mixed with the microparticle becomes posts to support a conductive metal after the microparticle is dissolved, and more firmly supports the conductive metal film.

Further, the method for manufacturing a dye-sensitized solar cell according to the embodiment may comprise a mixed layer formation step of forming a mixed layer of a conductive metal and a microparticle having a shape anisotropy and removable by heating or solvent cleaning, on the porous semiconductor layer, and a microparticle layer elimination step of eliminating the microparticle by heating or solvent cleaning.

Thereby, a conductive metal film in which a large number of through-holes are formed and irregularly arranged is obtained. According to this manufacturing method, since the mixed layer of a conductive metal and a microparticle is formed in one step, the manufacturing step can be simplified.

The method for manufacturing a dye-sensitized solar cell according to the embodiment may further comprise a porous semiconductor layer lamination step of forming another porous semiconductor layer different from the above-mentioned porous semiconductor layer, on the surface of the conductive metal film.

According to the heretofore-mentioned method for manufacturing a dye-sensitized solar cell according to the embodiment, since the manufacturing method is simple, and a large number of deep through-holes can be formed in the conductive metal film, the dye-sensitized solar cell according to the embodiment can suitably be obtained.

### Examples

The present invention will be further described by way of Examples and Comparative Examples. The scope of the present invention is not limited to Examples described hereinafter.

### (Example 1)

A titania paste (one layer of HT Paste and 5 layers of D Paste, made by Solaronics, Inc.) was applied in a thickness of 20 µm on a glass substrate, and baked at 500°C for 30 min to form a titania (titania layer, porous semiconductor layer). A tetrapod type crystal of zinc oxide (trade name: Pana-Tetra, the range of the maximum sizes: 2 to 20 µm, made by Panasonic Electric Works Co., Ltd.) was distributed on the titania surface of the baked substrate by the electrospray method. Thereafter, a Ti film (Ti layer, the film thickness: 300 nm) was formed by sputtering. The remaining tetrapod type crystal was rinsed with dilute hydrochloric acid to remove the tetrapod type crystal. Thereby, a porous Ti layer was fabricated.

Then, the substrate on which the Ti layer was formed was immersed in a 0.05-wt% dye solution (Black Dye, made by Solaronics, Inc., acetonitrile : t-butylalcohol = 1 : 1) for 20 hours.

As a counter electrode, used was a fluorine-doped tin oxide glass having been subjected to platinum sputtering (made by Solaronics, Inc.). The substrate on which the Ti layer was formed and the counter electrode were sealed with a spacer (Himilan, made by Du Pont-Mitsui Polychemicals Co., Ltd.) of 50 µm in thickness. An electrolyte solution composed of an acetonitrile solution of iodine of 40 mM, LiI of 500 mM and t-butylpyridine of 580 mM was injected in the obtained cell to fabricate a 5 mm-square cell (a unit cell of a cell).

The fabricated dye-sensitized solar cell was irradiated with a simulated solar light of AM1.5 and 100 mW/cm² using a solar simulator to measure and evaluate solar cell characteristics thereof, obtaining an efficiency of 10.7%.

### (Example 2)

5 mm-square and 50 mm-square cells were fabricated by the same method as in Example 1, except for that in place of the method of using the tetrapod type crystal of zinc oxide (trade name: Pana-Tetra, made by Panasonic Electric Works Co., Lid.) as it is, the tetrapod type crystal of zinc oxide trade name: Pana-Tetra, made by Panasonic Electric Works Co., Ltd.) was pulverized and the zinc oxide crystal made acicular was used.

Solar cell characteristics of the fabricated 5 mm-square cell was evaluated by the same method as in Example 1, obtaining an efficiency of 10.7%. The efficiency of the fabricated 50 mm-square cell was 8%, which revealed that the upsizing of the area exhibited only a small decrease in the performance.

### (Comparative Example 1)

A titania paste (one layer of HT Paste and 5 layers of D Paste, made by Solaronics, Inc.) was applied in a thickness of 20 µm on a transparent conductive film substrate (lowE Glass, made by Nippon Sheet Glass Co., Ltd.), and baked at 500°C for 30 min to form a titania (titania layer, porous semiconductor layer). The substrate was immersed in a 0.05-wet% dye solution (Black Dye, made by Solaronics, Inc., acetonitrile : t-butylalcohol = 1 : 1) for 20 hours. As a counter electrode, used was a fluorine-doped tin oxide glass having been subjected to platinum sputtering (made by Solaronics, Inc.). The titania substrate and the counter electrode were sealed with a spacer (Himilan, made by Du Pont-Mitsui Polychemicals Co., Ltd.) of 50 µm in thickness. As an electrolyte solution, used was an acetonitrile solution of iodine of 40 mM, LiI of 500 mM and t-butylpyridine of 580 mM.

Solar cell characteristics of a fabricated 5 mm-square cell were evaluated by the same method as in Example 1, obtaining an efficiency of 10.5%. Solar cell characteristics of a fabricated 50 mm-square cell were evaluated, obtaining an efficiency of 3%, which revealed that the upsizing of the area exhibited a large decrease in the performance.

### (Example 3)

A titania paste (P25, a water/ethanol mixed solvent) was applied in a thickness of 10 µm on a PET substrate 1 mm thick, and baked at 150°C for 30 min to form a titania (titania layer, porous semiconductor layer). A tetrapod type crystal of zinc oxide (trade name: Pana-Tetra, the range of the maximum sizes: 2 to 20 µm, made by Panasonic Electric Works Co., Ltd.) was distributed on the titania surface by the electrospray method. Thereafter, a Ti film (the film thickness: 300 nm) was formed by sputtering. The remaining zinc oxide balls were rinsed with dilute hydrochloric acid to remove the zinc oxide balls. Thereby, a porous Ti layer was fabricated.

Then, the substrate on which the Ti layer was formed was immersed in a 0.05-wt% dye solution (Black Dye, made by Solaronics, Inc., acetonitrile: t-butylalcohol = 1 : 1) for 20 hours.

As a counter electrode, used was a titanium plate having been subjected two platinum sputtering (made by Solaronics, Inc.). The substrate on which the Ti layer was formed and the counter electrode were sealed with a spacer (Himilan, made by Du Pont-Mitsui Polychemicals Co., Ltd.) of 25 µm in thickness. An electrolyte solution composed of an acetonitrile solution of iodine of 40 mM, LiI of 500 mM and t-butylpyridine of 580 mM was injected in the obtained cell to fabricate a 5 mm-square cell and a 50 mm-square cell.

The fabricated dye-sensitized solar cells were irradiated with a simulated solar light of AM1.5 and 100 mW/cm² using a solar simulator to measure and evaluate solar cell characteristics thereof, obtaining an efficiency of 4.5% for the 5 mm-square cell and 4% for the 50 mm-square cell, which revealed that the upsizing of the area exhibited only a small decrease in the performance.

### (Comparative Example 2)

A titania paste (P25, a water/ethanol mixed solvent) was applied in a thickness of 10 µm on a transparent conductive film plastic PET substrate (made by Sigma-Aldrich Corp., surface resistance: 10 to 20 Ω/square, thickness: 1 mm), and heated at 50°C for 30 min to form a titania (titania layer, porous semiconductor layer). Then, the substrate was immersed in a O.05-wt% dye solution (Black Dye, made by Solaronics, Inc., acetonitrile : t-butylalcohol = 1 : 1) for 20 hours.

As a counter electrode, used was a fluorine-doped tin oxide glass having been subjected to platinum sputtering (made by Solaronics, Inc.). The substrate (titania substrate) and a counter electrode were sealed with a spacer (Himilan, made by Du Pont-Mitsui Polychemicals Co., Ltd.) of 25 µm in thickness. An electrolyte solution composed of an acetonitrile solution of iodine of 40 mM, LiI of 500 mM and t-butylpyridine of 580 mM was injected in the obtained cell to fabricate a 5 mm-square cell and a 50 mm-square cell.

Solar cell characteristics of the fabricated cells were evaluated by the same method as in Example 3, obtaining an efficiency of 2.5% for the 5 mm-square cell and 0.5% for the 50 mm-square cell, which revealed that the upsizing of the area exhibited a large decrease in the performance.

### (Reference Example 1)

A 5 mm-square cell (a unit cell of a cell) was fabricated by the same method as in Example 1, except for that a polystyrene particle of 300 nm in particle diameter in place of the tetrapod type crystal of zinc oxide was sprayed on the titania surface of the baked substrate, and measured and evaluated for solar cell characteristics. The obtained efficiency of the cell was 10.0%.

### (Reference Example 2)

A 5 mm-square cell (a unit cell of a cell) was fabricated by the same method as in Example 1, except for that the substrate having a porous Ti layer formed on a baked titania, which was prepared in Example 1, was further heated at 500°C for 30 min, and thereafter, impregnated with a dye solution. The obtained efficiency of the cell was 3.6%.

### (Reference Example 3)

A titania paste (one layer of HT Paste and 5 layers of D Paste, made by Solaronics, Inc.) was applied in a thickness of 20 µm on a glass substrate, and heated at 100°C for 30 min to form a dried titania layer. A tetrapod type crystal of zinc oxide (trade name: Pana-Tetra, the range of the maximum sizes: 2 to 20 µm, made by Panasonic Electric Works Co., Ltd.) was distributed on the titania surface of the substrate by the electrospray method. Thereafter, a Ti film (Ti layer, the film thickness: 300 nm) was formed by sputtering. The remaining tetrapod type crystal was rinsed with dilute hydrochloric acid to remove the tetrapod type crystal. Thereby, a porous Ti layer was fabricated. Further, the substrate on which the dried titania layer and the porous Ti layer had been integrated was heated at 500°C for 30 min to bake the dried titania layer.

Thereafter, a 5 mm-square cell (a unit cell of a cell) was fabricated by the same method as in Example 1, and measured and evaluated for solar cell characteristics. The obtained efficiency of the cell was 3.5%.

In Figure 3, (A) shows a dye adsorption state of the titania in the case of using the porous Ti electrode (the porous Ti layer) in Example 1. The dye rapidly diffused to the titania through the porous Ti electrode, and was adsorbed on the whole surface of the titania. By contrast, in Figure 3, (B) shows a dye adsorption state of a glass substrate in the case where a dense Ti layer in place of the porous Ti electrode was formed on the glass substrate by a conventional method. The dye could hardly pass through the Ti layer due to the dense Ti layer, and was adsorbed only on quite a part (scattered islandlike portions in (B) in Figure 3) of the glass substrate.

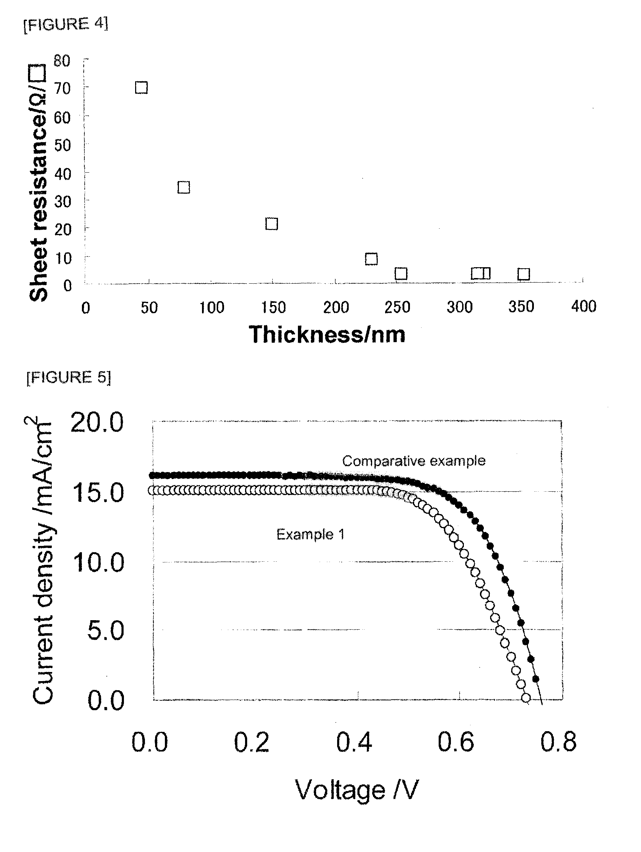

Figure 4 shows a relationship between the sheet resistance and the thickness of the Ti layer formed by sputtering in Examples 1 and 2. This reveals that the value of the sheet resistance largely decreased as the thickness of the Ti layer was increased and in the thickness of the Ti layer of 200 nm or more, the sheet resistance exhibited a low value of 10 (Ω/square) or less.

Figure 5 shows relationships between the voltages and the current densities of the cells fabricated in Example 1 and Comparative Example. This reveals that the cell fabricated in Example 1 had almost the same characteristic as the cell fabricated in Comparative Example.

## Claims

1. A dye-sensitized solar cell comprising:
a transparent substrate;
a porous semiconductor layer disposed on the transparent substrate and having a dye adsorbed thereon;
a conductive metal film disposed in the interior of the porous semiconductor layer or on a surface thereof on an opposite side to the transparent substrate, having a large number of deep poriform through-holes irregularly formed therein, and electrically connected to an external electrode; and
a conductive substrate installed opposite to the transparent substrate,
wherein the dye-sensitized solar cell comprises an electrolyte between the conductive metal film and the conductive substrate.

2. The dye-sensitized solar cell according to claim 1, wherein the conductive metal film has a thickness of 100 nm or more.

3. The dye-sensitized solar cell according to claim 1, wherein a material of the conductive metal film is a corrosion resistant metal.

4. The dye-sensitized, solar cell according to claim 3, wherein the corrosion resistant metal is one or two or more selected from tungsten, titanium and nickel, or a compound thereof.

5. A method for manufacturing a dye-sensitized solar cell according to any one of claims 1 to 4, comprising:
a microparticle layer formation step of disposing a microparticle having a shape anisotropy and removable by heating or solvent cleaning, on a porous semiconductor layer to form a microparticle layer;
a conductive metal film formation step of forming a conductive metal film on the microparticle layer; and
a microparticle layer elimination step of eliminating the microparticle layer by heating or solvent cleaning.

6. The method for manufacturing a dye-sensitized solar cell according to any one of claims 1 to 4, comprising:
a mixed layer formation step of forming a mixed layer of a porous semiconductor material and a microparticle having a shape anisotropy and removable by heating or solvent cleaning, on a porous semiconductor layer;
a conductive metal film formation step of forming a conductive metal film on the mixed layer; and
a microparticle layer elimination step of eliminating the microparticle by heating or solvent cleaning.

7. The method for manufacturing a dye-sensitized solar cell according to any one of claims 1 to 4, comprising:
a mixed layer formation step of forming a mixed layer of a conductive metal and a microparticle having a
shape anisotropy and removable by heating or solvent cleaning, on a porous semiconductor layer; and
a microparticle layer elimination step of eliminating the microparticle by heating or solvent cleaning.

8. The method for manufacturing a dye-sensitized solar cell according to any one of claims 5 t o7, further comprising a porous semiconductor layer lamination step of forming another porous semiconductor layer different from the porous semiconductor layer in any one of claims 5 to 7, on a surface of the conductive metal film.

9. The method for manufacturing a dye-sensitized solar cell according to any one of claims 5 to 8, wherein the microparticle having a shape anisotropy is a microparticle having a large number of legs with vertices of a polyhedron as tips thereof or an acicular microparticle.
